# EUROPEAN PATENT APPLICATION

(11) **EP 4 751 796 A1**
(43) Date of publication of application: **03.06.2026**
(21) Application number: 24216410.1
(22) Date of filing: 29.11.2024
(51) Int. Cl.: B01D 53/04, B01D 53/06

(54) **ADSORBER DEVICE**

(71) Applicant: MANN+HUMMEL GmbH, 71636 Ludwigsburg (DE)
(72) Inventor: JESSBERGER, Thomas, 71636 Ludwigsburg (DE); WELLER, Benedikt, 71636 Ludwigsburg (DE); EVLEKLI, Coskun, 71636 Ludwigsburg (DE)
(74) Representative: Mann + Hummel Intellectual Property

(57) **Abstract**

An adsorber device (10) comprises a housing (12) comprising an adsorption channel (18) for guiding an adsorption fluid flow, and a desorption channel (20) for guiding a desorption fluid flow, and an adsorber element (14) being rotatable in relation to the housing (12) and being arranged partly in the adsorption channel (18) and partly in the desorption channel (20). When the adsorber element (14) is rotated, a body of rotation is formed. An inlet portion (22) of the adsorption channel (18) is for directing the adsorption fluid flow into a first circumferential portion (30) of a generated surface of the body of rotation, and an inlet portion (26) of the desorption channel (20) is for directing the desorption fluid flow into a second circumferential portion (32) of the generated surface of the body of rotation.

## Description

### Technical Field

Embodiments refer to an adsorber device.

### Background Art

Devices of this type are generally known. For example DE 196 45 823 A1 discloses a device for removing impurities and/or moisture from an air flow. The device has a housing in which two air flow paths are formed. In the housing, as an adsorber element, a reactor in the form of a cylindrical disk is rotatably mounted. The front faces of the cylindrical disk are permeable to air, whereas the circumferential surface of the cylindrical disk is impermeable to air. The air flow paths pass through the reactor such that adsorption air flows through one region of the reactor and desorption air flows through another region.

EP 2 427 698 B1 reveals an active desiccant dehumidifier having a housing. In the housing, as an adsorber element, a desiccant wheel is arranged to be rotatable. The desiccant wheel is formed like a cylindrical disk. By rotating the desiccant wheel, it moves through a process compartment and a reactivation compartment. In the process compartment, the air to be dehumidified is passed through the wheel. In the regeneration compartment, air from the atmosphere is passed through the remaining portion of the wheel. The respective air flows through the wheel in the direction of its axis of rotation.

Disadvantageous regarding the known devices is that when aiming to increase the adsorption capacity of the respective adsorber device, the adsorber device requires a lot of space. Otherwise, the capacity of the adsorber device remains limited. This is because for an increase in capacity, the adsorber element may be extended either regarding its radius and/or in the direction of its axis of rotation. An extension regarding the radius of the adsorber element has the disadvantage that the adsorber element requires a lot of space, so that the adsorber device also requires a lot of space. For saving space in relation thereto, the adsorber element has to be extended in the direction of its axis of rotation. However, the further the cylindrical adsorber element extends along its axis of rotation, the more the flow resistance increases and the pressure decreases when flowing through the adsorber element in axial direction. As a result, the adsorption and/or desorption flow can no longer pass through the adsorber element above a threshold value for the extension of the adsorber element in axial direction. Therefore, the adsorber element is limited with regard to its axial extension and thus the capacity of the adsorber element is also limited. As a result, when aiming to increase the adsorption capacity the adsorption device either requires a lot of space or its adsorption capacity remains limited.

It is an object of the embodiments to provide an adsorber device whose adsorption capacity is increased while being space saving.

This is achieved by an adsorber device according to claim 1. Advantageous embodiments are given in the subclaims and the description.

### Summary

In accordance with the embodiments, an adsorber device is provided. Adsorption refers in particular to the accumulation of gases or dissolved substances (adsorbate) on the surface of solid substances (adsorbent), due to intermolecular forces. In the present case, the adsorber device serves for the adsorption of molecules out of a gas. The adsorber device may be used in air conditioners (such as HVAC-systems) of motor vehicles, commercial vehicles, residential buildings, and industrial buildings.

The adsorber device according to the embodiments comprises a housing comprising an adsorption channel for guiding an adsorption fluid flow, and a desorption channel for guiding a desorption fluid flow. Furthermore, the adsorber device comprises an adsorber element being rotatable in relation to the housing and being arranged partly in the adsorption channel and partly in the desorption channel. When the adsorber element is rotated, a body of rotation is formed. An inlet portion of the adsorption channel is for directing the adsorption fluid flow into a first circumferential portion of a generated surface of the body of rotation. An inlet portion of the desorption channel is for directing the desorption fluid flow into a second circumferential portion of the generated surface of the body of rotation.

Due to the fact, that the adsorption fluid flow is directed into a first circumferential portion of the generated surface of the body of rotation and/or the desorption fluid flow is directed into a second circumferential portion of the generated surface of the body of rotation, the adsorber element is flowed through essentially perpendicular to the axis of rotation of the adsorber element. This has the advantage that there is no increasing flow resistance and decreasing pressure for the fluid when the adsorber element is extended in a space-saving way in its axial direction for the purpose of increasing the capacity of the adsorber element. Thus, the adsorption capacity of the adsorber device can be high while the adsorber device can be space saving. In particular, a compact design of the adsorber device may be obtained while providing substantial adsorption capacity.

In a particular embodiment, it is provided that an outlet portion of the adsorption channel is for receiving the adsorption fluid flow from a third circumferential portion of the generated surface of the body of rotation, and an outlet portion of the desorption channel is for receiving the desorption fluid flow from a fourth circumferential portion of the generated surface of the body of rotation. This further supports the design of the adsorber device with a high capacity and space-saving construction.

The generated surface of the body of rotation is formed by the outside contour of the rotating adsorber element and is assumed as stationary, even if the adsorber element is rotated. Thus, the respective circumferential portion of the generated surface is at any time oriented to the same portion of the respective channel no matter in which rotary position the adsorber element is arranged. In detail: The inlet portion of the adsorption channel is oriented permanently to the first circumferential portion of the generated surface of the body of rotation. The inlet portion of the desorption channel is oriented permanently to the second circumferential portion of the generated surface. The outlet portion of the adsorption channel is oriented permanently to the third circumferential portion of the generated surface. The outlet portion of the desorption channel is oriented permanently to the fourth circumferential portion of the generated surface. The adsorber element rotates in relation to the circumferential portions of the generated surface. Thus, different sections of the adsorber element are arranged at the respective circumferential portions, when the adsorber element is rotated.

In a further particular embodiment, it is provided that the adsorber element comprises exactly one compartment containing at least one adsorber material. In other words, the adsorber element has only one compartment. The exactly one compartment may be cylindrical. The adsorber element having exactly one compartment may be used for continuously rotation of the adsorber element while the adsorption fluid flow and the desorption fluid flow pass through the adsorber element at the same time. This allows for a particularly simple design of the adsorber element.

In a further particular embodiment, it is provided that the adsorber element comprises at least two compartments each containing at least one adsorber material, the at least two compartments being spatially and/or fluidically separated from each other. By separating the compartments spatially from each other, the pressure loss or the fluid flow passing through the adsorber element is reduced. A fluidical separation may prevent cross-flow between the adsorption and desorption channel. When the term fluidically separated is mentioned above or below, it may mean hermetically separated.

In a further particular embodiment, it is provided that the adsorber element further comprises at least one partition wall for separating the at least two compartments fluidically from each other. The respective partition wall may extend in a plane in which the longitudinal axis of the adsorber element lies. Alternatively or additionally, the respective partition wall may extend in a plane that is aligned transverse to the longitudinal axis of the adsorber element. The respective partition wall may extend at least so far in the respective plane as long as it is in contact on at least one side with adsorber material.

In a further particular embodiment, it is provided that at least one of the at least two compartments contains an adsorber material differing from another adsorber material in another one of the at least two compartments. Thus, molecules of different types may be removed from the fluid flow using particularly suited adsorber materials.

In a further particular embodiment, it is provided that the adsorber element further comprises at least one fluid-permeable restraining element delimiting the at least two compartments. In particular, each compartment is delimited by at least one fluid-permeable restraining element. Thus, the adsorber material is confined and at the same time can be passed through by fluid.

In a further particular embodiment, it is provided that the adsorber element is formed such that the adsorption fluid flow, seen in a direction of the adsorption fluid flow, flows through different adsorber materials in succession. Thus, the sequence of adsorption of the fluid passing through the adsorption channel may be predetermined. Moreover, the fluid flow passing the compartments having adsorber materials differing from each other allows for a purification of the fluid flow from molecules of different types, for example carbon dioxide molecules, water molecules and/or volatile organic compounds.

In a further particular embodiment, it is provided that the adsorber device further comprises a flow control element for allowing and blocking the desorption fluid flow into the desorption channel. Thus, fluid is only fed into the desorption channel when required for desorption. For this purpose, the flow control element may be moveable between two end positions, namely a completely open position and a closed position. It is also conceivable that the flow control element is controllable to move to at least one intermediate position between the completely open position and the closed position. This allows adjusting the fluid flow through the desorption channel.

In a further particular embodiment, it is provided that the housing comprises a common feed channel for the adsorption channel and the desorption channel. The adsorber device further comprises a blower device for generating a common fluid flow through the common feed channel, and for adjusting a flow rate of the common fluid flow based on a position of the flow control element so that a constant flow rate of the adsorption fluid flow flows through the adsorption channel. Due to the common feed channel, only one blower device is required for supplying both of the channels with fluid flow. Particularly, one common blower device may be arranged in the feed channel.

Typically, the fluid flow in the adsorption channel is basically parallel to the fluid flow in the desorption channel. Due to the fact, that the adsorber element is rotated about its longitudinal axis, one part of the adsorber element is flown through in a first direction, when this part is arranged in the adsorber channel. When the respective part of the adsorber element is arranged in the desorption channel, the direction of fluid flow is reversed with respect to the adsorber element. In other words, a fluid flow coming from one common feed channel passes the adsorber material in the adsorption channel in one direction and passes the adsorber material of this one part of the adsorber element in the opposite direction, when arranged in the desorption channel.

In a further particular embodiment, it is provided that the adsorber device further comprises a heater arranged in the desorption channel. The heater serves for heating up the desorption fluid flow for regeneration of the adsorber material arranged in the desorption channel. The heater may comprise PTC - positive temperature coefficient - heating elements. The heater may only be activated when the flow control element is at least partially opened. This allows reducing energy consumption. The heater is arranged at a distance from the adsorber element. Thereby, uniform heat input into the adsorber element in its section arranged in the desorption channel may be obtained. Further, overheating the adsorber material is avoided. The distance may be at least 5 centimeters, particularly at least 10 centimeters.

In a further particular embodiment, it is provided that each of the adsorption and the desorption channel is divided into at least two sub channels. Due to the division into at least two sub channels, a fluid to be purified may be fed to the adsorber element separated from another fluid to be purified by the adsorber element. Different adsorber materials may be arranged for the sub channels.

In a further particular embodiment, it is provided that the adsorber material comprises any one or any combination of oxidic sorbents, carbon-based adsorbents, and polymeric adsorbents. The oxidic sorbents may comprise silicates and/or zeolites. Silicates and/or zeolites may be particularly suitable for water adsorption. The carbon-based adsorbent may comprise activated carbon. Carbon-based sorbents may be particularly suitable for the adsorption of volatile organic compounds. The polymeric adsorbents may comprise polystyrene base. Polymeric adsorbents may be particularly suitable for carbon dioxide adsorption.

In a further particular embodiment, it is provided that the adsorber device further comprises a controlled actuator for rotating the adsorber element continuously or intermittently. When rotating the adsorber element intermittently, the adsorber element may be rotated about 180 degrees, 90 degrees or 45 degrees at a step of time. Intermittent rotation is particularly suitable for adsorber elements having a partition wall. Intermittent rotation allows saving energy, since the adsorber element is only rotated after an extended period of use. Continuous rotation may be simpler to control and may be advantageous for reduced manufacturing costs.

For rotation of the adsorber element, an actuator may be provided. The actuator may be a motor, for example an electric motor, in particular a servo motor.

In a further particular embodiment, it is provided that the adsorber element comprises a supporting structure. The supporting structure may be arranged at least on the outside of the adsorber element. The supporting structure may extend axially and/or circumferentially over the entire adsorber element. The supporting structure may comprise ribs extending in axial direction and/or circumferentially. The supporting structure may comprise passages (flow openings) for the fluid flow.

In a further particular embodiment, it is provided that each of a wall of the adsorption channel and a wall of the desorption channel comprises an outward bulging section adapted to an outer contour of the adsorber element, and the adsorber element engages into the outward bulging section of each of the walls. Thus, a slender design of the adsorption and/or desorption channel may be obtained while providing an adsorber element with high capacity. Further, a sufficiently good seal may be realized for sealing the inlet portion of the adsorption channel from the outlet portion of the adsorption channel and/or sealing the inlet portion of the desorption channel from the outlet of the desorption channel. An axial rib of the support structure may block or at least reduce a bypass flow between the adsorber material and the outward bulging wall section. By avoiding contact of the adsorber element and the wall, rotation resistance of the adsorber element is reduced for low energy consumption when it is being rotated.

Subject of the embodiments is also an adsorber element for the adsorber device as described above. The adsorber element comprises an axis of rotation and at least one adsorber material. At least one axial end face of the adsorber element is impermeable for fluid flow. The adsorber element may have a circumferential surface. The circumferential surface may be provided by a support structure. The circumferential surface, if provided, is at least partially permeable for fluid flow. The adsorber element may comprise further features as described above.

### Brief Description of Drawings

Other advantages and features of the embodiments will be appreciated from the following description of the embodiments with reference to the figures of the drawing, which show significant details, and from the claims. The individual features, as described above or explained below, may each be implemented individually or implemented together in any useful combination in variants of the embodiments.
Fig. 1 shows, schematic, not to scale and cut off, a perspective view of an adsorber device according to the embodiments.
Fig. 2 shows, schematic and not to scale, a perspective sectional view of the adsorber device according to the embodiments sectioned along the section line shown in Fig. 1.
Fig. 3 shows, schematic and not to scale, a side view of an adsorber element, according to the embodiments, for the adsorber device shown in Fig. 2.
Fig. 4 shows, schematic and not to scale, a cross section of a first embodiment of the adsorber element shown in Fig. 3, sectioned along the section line shown in Fig. 3.
Fig. 5 shows, schematic and not to scale, a cross section of a second embodiment of the adsorber element.
Fig. 6 shows, schematic and not to scale, a cross section of a third embodiment of the adsorber element.
Fig. 7 shows, schematic and not to scale, a cross section of a fourth embodiment of the adsorber element.

### Detailed Description

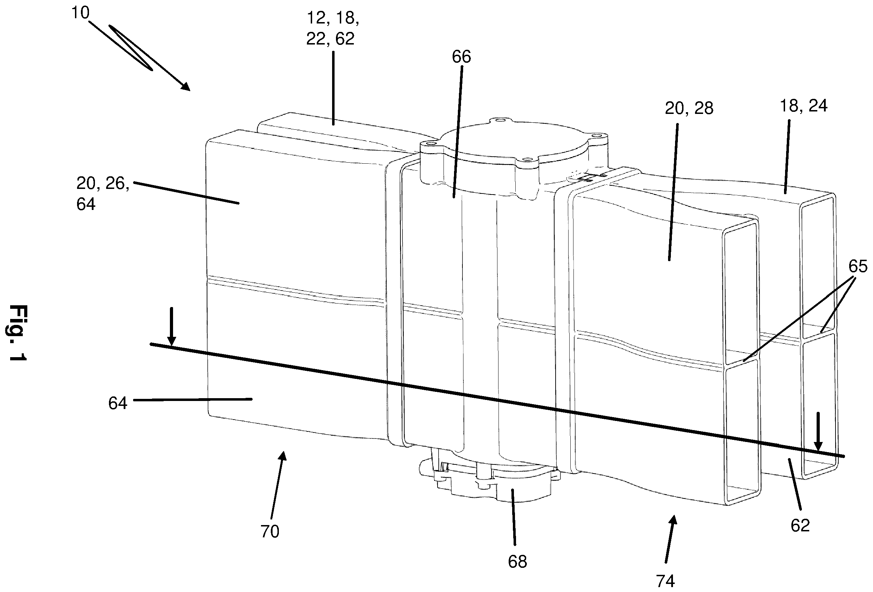

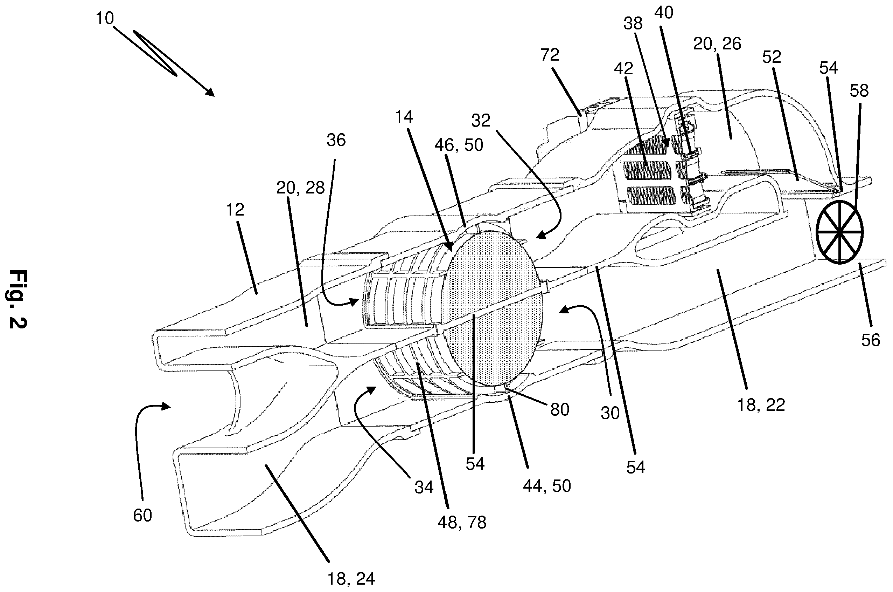

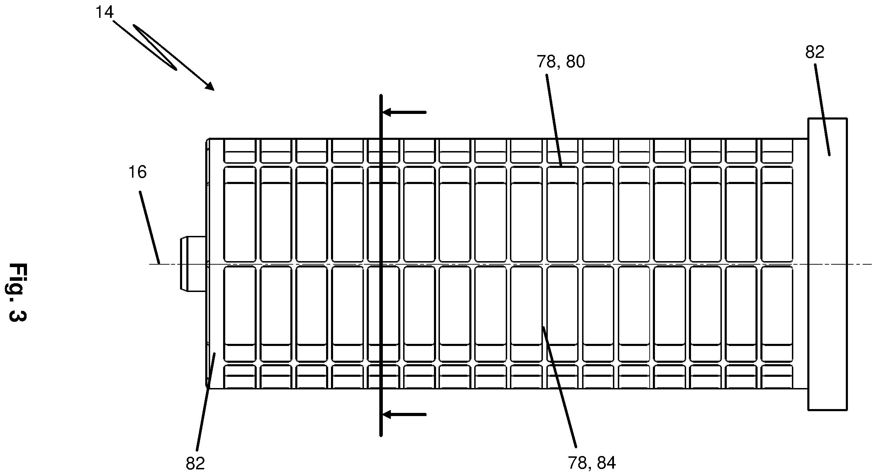

Fig. 1 and 2 show an adsorber device 10 according to the embodiments. The adsorber device 10 has a housing 12 and an adsorber element 14 beeing accomodated in the housing 12 and beeing rotatably mounted in relation to the housing 12 about its longitudinal axis 16 (Fig. 3). An adsorption channel 18 and a desorption channel 20 extend through the housing 12. The adsorber element 14 prodrudes partially in the adsorption channel 18 and partially in the desorption channel 20 such that an adsorption fluid flow guided by the adsorption channel 18 and a desorption fluid flow guided by the desorption channel 20 pass through the adsorber element 14 on their way through the housing 12.

Seen in the direction of fluid flow, upstream adjoining to the adsorber element 14 the adsorption channel 18 has an inlet portion 22 and downstream adjoining to the adsorber element 14 the adsorption channel 18 has an outlet portion 24. Analogously seen in the direction of fluid flow, upstream adjoining to the adsorber element 14 the desorption channel 20 has an inlet portion 26 and downstream adjoining to the adsorber element 14 the desorption channel 20 has an outlet portion 28.

When rotating the adsorber element 14 about its longitudinal axis 16 a fictitious body of rotation is created by the outer contour of the adsorber element 14. The fictitious body has a generated surface. In every cross section perpendicular to the axis of rotation 16, the generated surface of the fictuous body of rotation is circular. The generated surface of the body of rotation is assumed being stationary even if the adsorber element 14 is rotated.

The inlet portion 22 of the adsorption channel 18 guides the adsorption fluid flow such that it enters the adsorber element 14 through a first circumferential portion 30 of the generated surface of the body of rotation. Thereupon the adsorption fluid flow flows through the adsorber element 14 and exits the adsorber element 14 through a third circumferential portion 34 of the generated surface of the body of rotation into the outlet portion 24 of the adsorption channel 18. Analogously the inlet portion 26 of the desorption channel 20 guides the desorption fluid flow such that it enters the adsorber element 14 through a second circumferential portion 32 of the generated surface of the body of rotation. Thereafter the desorption fluid flow passes through the adsorber element 14 and exits the adsorber element 14 through a fourth circumferential portion 36 of the generated surface of the body of rotation into the outlet portion 28 of the desorption channel 20. The respective circumferential portions 30, 32, 34, 36 of the generated surface are at any time oriented to the same portion 22, 24, 26, 28 of the respective channel 18, 20, no matter in which rotary position the adsorber element 14 is arranged.

At a distance from the adsorber element 14, in the inlet portion 26 of the desorption channel 20 a heater 38 is arranged. The heater 38 serves for heating up the desorption fluid flow for the purpose of regenerating the part of the adsorber element 14 arranged in the desorption channel 20. The heater 38 may extend over the whole width and/or the whole height of the desorption channel 20. The heater 38 may comprise PTC - positive temperature coefficient - heating elements 40 and heating fins 42 therebetween.

The adsorber element 14 is designed cylindrically. In the area of the adsorber element 14, the outer wall 44 of the adsorption channel 18 and the outer wall 46 of the desorption channel 20, both have an outward bulging section 50 adjacent to a circumference 48 of the adsorber element 14. The respective outward bulging section 50 is adapted to the circumferential contour of the adsorber element 14. The adsorber element 14 engages into said outward bulging sections 50, in particular with an axial rib 80 being arranged in each of the outward bulging sections 50 irrespective of the rotational orientation of the adsorber element 14. Thus, the inlet portion 22 of the adsorption channel 18 is adequately sealed from the outlet portion 24 of the adsorption channel 18 and the inlet portion 26 of the desorption channel 20 is adequately sealed from the outlet portion 28 of the desorption channel 20.

Seen in fluid flow direction, upstream before the heater 38 in the inlet portion 26 of the desorption channel 20, i.e., in the area at the beginning of the inlet portion 26 of the desorption channel 20, a flow control element 52 in form of a movable flap is arranged. The flow control element 52 is movable between two end positions, namely a closed position and a completely open position. In the closed position, the flow control element 52 blocks fluid flow into the desorption channel 20, and in a position at least partially open, the flow control element 52 allows fluid flow into the desorption channel 20. The flow control element 52 is formed like a plate that extends over the entire height of the desorption channel 20. The flow control element 52 is pivotably hinged at one end to a partition wall 54 of the housing 12 that separates the inlet portion 22 of the adsorption channel 18 from the inlet portion 26 of the desorption channel 20.

Seen in fluid flow direction, upstream before the inlet portion 26 of the desorption channel 20 and the inlet portion 22 of the adsorption channel 18 a common feed channel 56 is arranged for both channels 18, 20. The feed channel 56 is permanently fluidically connected to the inlet portion 22 of the adsorption channel 18 and fluidically connected to inlet portion 26 of the desorption channel 20 via the flow control element 52.

In the feed channel 56 a blower device 58 is arranged for generating a common fluid flow from the feed channel 56 into the inlet portion 22 of the adsorption channel 18 and, if the flow control element 52 is opened, also into the inlet portion 26 of the desorption channel 20. The blower device 58 also adjusts a flow rate of the common fluid flow based on a position of the flow control element 52 so that a constant flow rate of the adsorption fluid flow flows through the adsorption channel 18.

It is also conceivable that no common feed channel is provided (not depicted in detail). Similarly, one blower device may be provided for generating fluid flow into the inlet portion 22 of the adsorption channel 18 and another blower device may be priovided for generating fluid flow into the inlet portion 26 of the desorption channel 20 (not depicted in detail).

In the end areas of the outlet portions 24, 28, a gap 60 is formed between the adsorption channel 18 and the desorption channel 20.

The adsorption channel 18 and the desorption channel 20 may each be divided into two sub channels 62, 64 (Fig. 1). Thus, two fluids to be purified can be fed into the adsorber device 10 separated from each other. A separation wall 65 between the sub channels 62, 64 may enhance mechanical stability of the channels 18, 20.

The housing 12 has a three-part design. A main part 66 of the housing accomodates the adsorber element 14. An actuator 68 in form of a servomotor for rotating the adsorber element 14 is arranged on the ouside of the main part 66 of the housing 12.

To one side of the main part 66, an inlet part 70 of the housing 12 adjoins the main part 66. The inlet part 70 contains the heater 38 at least partially and the flow control element 52. A connection socket 72 of the heater 38 (Fig. 2) is arranged at the ouside of the housing 12.

To the other side of the housing 12, an outlet part 74 of the housing 12 (Fig. 1) adjoins the main part 66. The outlet part 74 comprises the end areas of the outlet portions 24, 28 separated from one another with intermediate arrangement of the gap 60 (Fig. 2).

Fig. 3 shows an adsorber element 14. At least on the outside of the adsorber element 14 a supporting structure 78 is provided. The supporting structure 78 has axially extending ribs 80 distributed, in particular equally, over the circumference 48 of the adsorber element 14 and extending between two end caps 82 of the adsorber element 14. Furthermore, the supporting structure 78 has circumferentially extending ribs 84 distributed, in particular equally, along the longitudinal axis 16 of the adsorber element 14. The end caps 82 are impermeable for fluid flow.

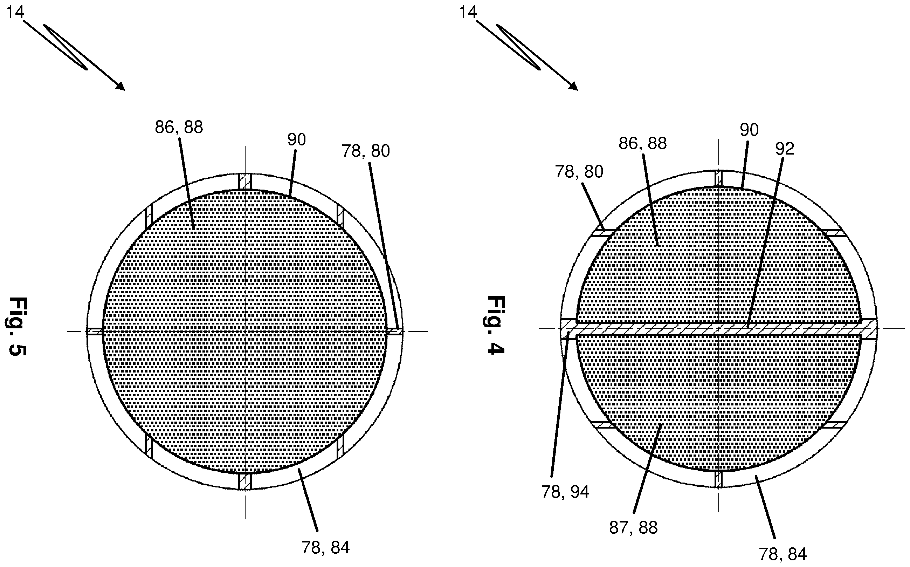

Fig. 4 shows a cross section of a first embodiment of the adsorber element 14 along the section line shown in Fig. 3. The adsorber element 14 has two compartments 86, 87, each containing at least one adsorber material 88. Typically, both compartments 86, 87 contain the same type of adsorber material 88 or the same mixture of adsorber materials. Each compartment 86, 87 is formed like a half cylinder and is delimited at least at its circumference by a fluid-permeable restraining element 90. The two compartments 86, 87 are fluidically separated from each other by a partition wall 92. The partition wall 92 extends over the entire length and width through the adsorber material 88. The longitudinal axis 16 of the adsorber element 14 lies in the partition wall 92. An outer edge 94 of the partition wall 92 is part of the supporting structure 78.

The adsorber element 14 of Fig. 4 is rotated in half turns. In both orientations, the partition wall 92 of the adsorber element 14 is aligned with the partition wall 54 of the housing 12 (Fig. 2) separating the adsorption channel 18 from the desorption channel 20. Thus, one compartment 86 is arranged in the adsorption channel 18 and the other compartment 87 is arranged in the desorption channel 20. The partition wall 54 prevents cross flow between the adsorption channel 18 and the desorption channel 20.

During solely adsorption operation of the adsorber device 10, the flow control element 52 (Fig. 2) is arranged in its closed position and a fluid flow to be purified is fed into the feed channel 56. Thereafter the fluid flow at first passes the inlet portion 22 of the adsorption channel 18 and then flows through the (first) compartment 86 of the adsorber device 10. When the compartment 86 is depleted, the adsorber element 14 is rotated about its longitudinal axis by 180 degrees, so that the compartment 86 is now arranged in the desorption channel 20 and the other compartment 87 is arranged in the adsorption channel 18. Now the other compartment 87 is used for adsorption operation and, at the same time, the compartment 86 is regenerated in the desorption channel 20. For this, the flow control element 52 is brought in its open position and the heater 38 is turned on. Thus, the fluid flow to be purified and fed into the feed channel 56 flows partially into the adsorption channel 18 and partially into the desorption channel 20. In the inlet portion 26 of the desorption channel 20, the fluid flow is heated up by the heater 38 and then passes the (first) compartment 86 of the adsorber element 14 for regeneration. When the regeneration is complete, the flow control element 52 is closed and the heater 38 is turned off.

Fig. 5 shows a cross section of a second embodiment of the adsorber element 14. The adsorber element 14 has only one compartment 86 containing at least one adsorber material 88. The compartment 86 has a cylindrical design. Its circumference is delimited by a fluid-permeable restraining element 90.

In this embodiment, adsorption operation and desorption operation are permanently performed at the same time. For this, the flow control element 52 is permanently open at least partially, the heater 38 is permanently turned on and the adsorber element 14 is rotated continuously.

A fluid flow to be purified is fed into the feed channel 56 (Fig. 2) and flows partly into the inlet portion 22 of the adsorption channel 18 and partly into inlet portion 26 of the desorption channel 20. Thereafter, the fluid flow in the inlet portion 22 of the adsorption channel 18 passes the part of the adsorber element 14 currently arranged in the adsorption channel 18 and further flows into the outlet portion 24 of the adsorption channel 18. The fluid flow in the inlet portion 26 of the desorption channel 20 is first heated up by the heater 38 and then passes through the part of the adsorber element 14 currently arranged in the desorption channel 20 for regeneration thereof and further flows into the outlet portion 28 of the desorption channel 20.

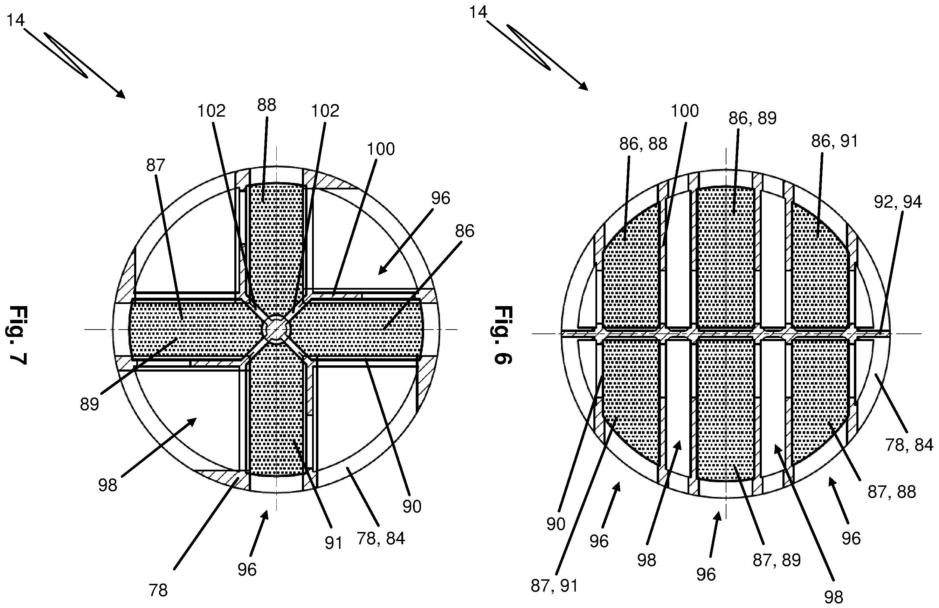

Fig. 6 shows a cross section of a third embodiment of the adsorber element 14. The adsorber element 14 has three compartment pairs 96. The compartments 86, 87 of each compartment pair 96 are separated fluidically from one another by a common partition wall 92. The partition wall 92 extends in a plane in which the longitudinal axis 16 of the adsorber element 14 lies, through the entire adsorber element 14 and ends on the circumferential side of the adsorber element 14 with the circumferentially extending ribs 84 of the supporting structure 78. Each compartment pair 96 is at distance from the at least one adjacent compartment pair 96 with intermediate arrangement of a gap 98. The larger the gap 98, the lower the pressure loss of the fluid flow through the adsorber element 14. Each compartment 86, 87 is delimited by a fluid-permeable restraining element 90. Transverse to the partition wall 92, the supporting structure 78 has a perforated supporting wall 100 on each side of each compartment pair 96. The supporting walls 100 extend along the longitudinal axis 16 of the adsorber element 14 over the entire adsorber element 14 and terminate on the circumferential side of the adsorber element 14 with the circumferentially extending ribs 84 of the supporting structure 78.

The adsorber element 14 of Fig. 6 is rotated in half turns. In both orientations, the partition wall 92 of the adsorber element 14 is aligned with the partition wall 54 of the housing 12 separating the adsorption channel 18 from the desorption channel 20.

First, the three compartments 86 are arranged in the adsorption channel 18 and the further three compartments 87 are arranged in the desorption channel 20. Then, the further three compartments 87 are arranged in the adsorption channel 18 and the three compartments 86 are arranged in the desorption channel 20.

The three compartments 86 contain adsorber materials 88, 89, 91 different from each other. Thus, the sequence of the molecules to be removed from the fluid flow can be specified. Similarly, the further three compartments 87 contain adsorber materials 88, 89, 91 different from each other corresponding to the three compartments 86. It is also conceivable that in each compartment 86, 87 more than one type of adsorber material may be contained.

During solely adsorption operation of the adsorber device 10, the flow control element 52 is in its closed position and a fluid flow to be purified is fed into the feed channel 56. Thereafter the fluid flow at first passes the inlet portion 22 of the adsorption channel 18 and then flows, in succession, through the three compartments 86 of the adsorber element 14 arranged in the adsorption channel 18. When at least one of said three compartments 86 is depleted, the adsorber element 14 is rotated about its longitudinal axis by 180 degrees, so that said three compartments 86 are now arranged in the desorption channel 20 and the further three compartments 87 are arranged in the adsorption channel 18. Now the further three compartments 87 are used for adsorption operation and at the same time the three compartments 86 are regenerated in the desorption channel 20. For this, the flow control element 52 is brought in its open position and the heater 38 is turned on. Thus, the fluid flow to be purified and fed into the feed channel 56 flows partially into the adsorption channel 18 and partially into the desorption channel 20. In the inlet portion 26 of the desorption channel 20 the fluid flow is heated up by the heater 38 and then passes the three compartments 86 of the adsorber element 14 for regeneration. When the regeneration is complete, the flow control element 52 is closed and the heater 38 is turned off.

Fig. 7 shows a cross section of a fourth embodiment of the adsorber element 14. The adsorber element 14 has two compartment pairs 96. Each of the compartment pairs 96 has two compartments 86, 87, which are opposite each other with respect to the longitudinal axis 16 of the adsorber element 14. In relation to the one compartment pair 96, the other compartment pair 96 is offset in circumferential direction about 90 degrees around the longitudinal axis 16 of the adsorber element 14. Every compartment 86, 87 is delimited by a fluid-permeable restraining element 90. The supporting structure 78 has a perforated supporting wall 100 on the opposite sides of every compartment 86. Along the longitudinal axis 16 of the adsorber element 14, the respective supporting wall 100 extends over the entire adsorber element 14. At the circumferential side of the adsorber element 14, the respective supporting wall 100 ends with the circumferentially extending ribs 84 of the supporting structure 78. Adjacent to the longitudinal axis 16 of the adsorber element 14, the respective supporting wall 100 ends at a distance to a fictitious plane centered between the compartments 86, 87 and containing the longitudinal axis 16. As part of the supporting structure 78, starting from every end of the supporting wall 100 adjacent to the fictitious plane, a further wall 102 extends to the longitudinal axis 16 of the adsorber element 14, where all the further walls 102 merge into one another to form an axis piece. Each further wall 102 may be fluid-permeable or fluid-impermeable.

The in total four compartments 86, 87 may contain adsorber material 88 different from each other. Alternatively, the four compartments 86, 87 may all contain the same type of adsorber material 88 or the same mixture of adsorber materials. It is also conceivable that in every compartment 86, 87 more than one type of adsorber material 88 is contained.

In this embodiment adsorption operation and desorption operation are permanently performed at the same time. For this, the flow control element 52 is permanently open at least partially, the heater 38 is permanently turned on and the adsorber element 14 is rotated continuously.

A fluid flow to be purified is fed into the feed channel 56 and flows partly into the inlet portion 22 of the adsorption channel 18 and partly into inlet portion 26 of the desorption channel 20. Thereafter, the fluid flow in the inlet portion 22 of the adsorption channel 18 passes the part of the adsorber element 14 currently arranged in the adsorption channel 18 and further flows into the outlet portion 24 of the adsorption channel 18. The fluid flow in the inlet portion 26 of the desorption channel 20 is at first heated up by the heater 38 and then for regeneration passes through the part of the adsorber element 14 currently arranged in the desorption channel 20 and further flows into the outlet portion 28 of the desorption channel 20.

In summary, the embodiments refer to an adsorber device. An adsorber element is rotatable so as to be partially arranged in an adsorption channel and partially in a desorption channel. Portions of the adsorption and desorption channel adjacent to the adsorber element may be separated from one another by a common partition wall. A partition wall segment adjacent to the adsorber element may define a plane, which comprises the axis of rotation of the adsorber element. By rotating the adsorber element, a - typically cylindrical - body of rotation is defined. The adsorber element itself may comprise a cylindrical outer contour, which in this case corresponds to the body of rotation. The adsorption and desorption channels both direct gas to pass through a circumferential portion of the body of rotation into and out of the part of the adsorber element currently arranged in the adsorption or desorption channel, respectively. Axial ends of the adsorber element may be impermeable.

### Reference Signs List

- 10: adsorber device
- 12: housing
- 14: adsorber element
- 16: longitudinal axis of the adsorber element
- 18: adsorption channel
- 20: desorption channel
- 22: inlet portion of adsorption channel
- 24: outlet portion of adsorption channel
- 26: inlet portion of desorption channel
- 28: outlet portion of desorption channel
- 30: first circumferential portion of the generated surface
- 32: second circumferential portion of the generated surface
- 34: third circumferential portion of the generated surface
- 36: fourth circumferential portion of the generated surface
- 38: heater
- 40: heating elements
- 42: heating fins
- 44: wall of the adsorption channel
- 46: wall of the desorption channel
- 48: circumference of the adsorber element
- 50: outward bulging section
- 52: flow control element
- 54: partition wall of the housing
- 56: feed channel
- 58: blower device
- 60: gap between channels
- 62: sub channels of the adsorption channel
- 64: sub channels of the desorption channel
- 65: separation wall between sub channels
- 66: main part of the housing
- 68: actuator
- 70: inlet part of the housing
- 72: connection socket
- 74: outlet part of the housing
- 78: supporting structure
- 80: axial ribs of supporting structure
- 82: end cap
- 84: circumferential ribs of supporting structure
- 86: one compartment
- 87: other compartment
- 88: adsorber material
- 89: further adsorber material
- 90: restraining element
- 91: further adsorber material
- 92: partition wall of the adsorber element
- 94: edge of partition wall
- 96: compartment pair
- 98: gap of the adsorber element
- 100: supporting wall
- 102: further wall

## Claims

1. An adsorber device (10) comprising:
a housing (12) comprising an adsorption channel (18) for guiding an adsorption fluid flow, and a desorption channel (20) for guiding a desorption fluid flow; and
an adsorber element (14) being rotatable in relation to the housing (12) and being arranged partly in the adsorption channel (18) and partly in the desorption channel (20),
wherein when the adsorber element (14) is rotated, a body of rotation is formed,
wherein an inlet portion (22) of the adsorption channel (18) is for directing the adsorption fluid flow into a first circumferential portion (30) of a generated surface of the body of rotation, and
wherein an inlet portion (26) of the desorption channel (20) is for directing the desorption fluid flow into a second circumferential portion (32) of the generated surface of the body of rotation.

2. The adsorber device (10) according to claim 1, wherein an outlet portion (24) of the adsorption channel (18) is for receiving the adsorption fluid flow from a third circumferential portion (34) of the generated surface of the body of rotation, and
wherein an outlet portion (28) of the desorption channel (20) is for receiving the desorption fluid flow from a fourth circumferential portion (36) of the generated surface of the body of rotation.

3. The adsorber device (10) according to claim 1 or 2, wherein the adsorber element (14) comprises exactly one compartment (86) containing at least one adsorber material (88, 89, 91).

4. The adsorber device (10) according to claim 1 or 2, wherein the adsorber element (14) comprises at least two compartments (86, 87) each containing at least one adsorber material (88, 89, 91), the at least two compartments (86, 87) being spatially and/or fluidically separated from each other.

5. The adsorber device (10) according to claim 4, wherein the adsorber element (14) further comprises at least one partition wall (92) for separating the at least two compartments (86, 87) fluidically from each other.

6. The adsorber device (10) according to any one of claims 4 or 5, wherein at least one of the at least two compartments (86, 87) contains an adsorber material (88, 89, 91) differing from another adsorber material (88, 89, 91) in another one of the at least two compartments (86, 87).

7. The adsorber device (10) according to any one of claims 4 to 6, wherein the adsorber element (14) further comprises at least one fluid-permeable restraining element (90) delimiting the at least two compartments (86, 87).

8. The adsorber device (10) according to any of claims 1 to 7, wherein the adsorber element (14) is formed such that the adsorption fluid flow, seen in a direction of the adsorption fluid flow, flows through different adsorber materials (88, 89, 91) in succession.

9. The adsorber device (10) according to any one of claims 1 to 8, further comprising a flow control element (52) for allowing and blocking the desorption fluid flow into the desorption channel (20).

10. The adsorber device (10) according to claim 9, wherein the housing (12) further comprises a common feed channel (56) for the adsorption channel (18) and the desorption channel (20), and
wherein the adsorber device (10) further comprises a blower device (58) for generating a common fluid flow through the common feed channel (56), and for adjusting a flow rate of the common fluid flow based on a position of the flow control element (52) so that a constant flow rate of the adsorption fluid flow flows through the adsorption channel (18).

11. The adsorber device (10) according to any one of claims 1 to 10, further comprising a heater (38) arranged in the desorption channel (20) at a distance from the adsorber element (14).

12. The adsorber device (10) according to any one of claims 1 to 11, further comprising a controlled actuator 68 for rotating the adsorber element (14) continuously or intermittently.

13. The adsorber device (10) according to any one of claims 1 to 12, wherein the adsorber element (14) comprises a supporting structure (78).

14. The adsorber device (10) according to any one of claims 1 to 13, wherein each of a wall (44) of the adsorption channel (18) and a wall (46) of the desorption channel (20) comprises an outward bulging section (50) adapted to an outer contour of the adsorber element (14), and
wherein the adsorber element (14) engages into the outward bulging section (50) of each of the wall (44) and the wall (46).

15. An adsorber element (14) for the adsorber device (10) according to any one of claims 1 to 14, the adsorber element (14) comprising:
an axis of rotation (16); and
at least one adsorber material (88, 89, 91),
wherein at least one axial end face of the adsorber element (14) is impermeable for fluid flow, and
wherein a circumferential surface of the adsorber element (14) is at least partially permeable for fluid flow.
